Europäisches Patentamt

European Patent Office

Office européen des brevets

(19)

(11) Veröffentlichungsnummer : **0 022 452**
**B2**

(12) **NEUE EUROPÄISCHE PATENTSCHRIFT**

(45) Veröffentlichungstag der neuen Patentschrift :
**19.10.88**

(21) Anmeldenummer : **80102218.7**

(22) Anmeldetag : **25.04.80**

(51) Int. Cl.⁴ : **C 09 D  3/72**, C 09 D  3/66,
C 09 D  5/25

(54) **Anstrichmittel auf Basis eines Polyurethan-Prepolymers und eines Polyesterharzes, Verfahren zu seiner Herstellung und seine Verwendung zum Überziehen von metallischen Oberflächen.**

(30) Priorität : **29.06.79 IT 2400879**

(43) Veröffentlichungstag der Anmeldung :
**21.01.81 Patentblatt 81/03**

(45) Bekanntmachung des Hinweises auf die Patenterteilung : **02.02.83 Patentblatt 83/05**

(45) Bekanntmachung des Hinweises auf die Entscheidung über den Einspruch : **19.10.88 Patentblatt 88/42**

(84) Benannte Vertragsstaaten :
**AT BE CH DE FR GB LI LU NL SE**

(56) Entgegenhaltungen :
**DE-A- 2 456 469**
**DE-A- 2 528 212**
**DE-A- 2 624 442**
**DE-B- 2 452 074**
**GB-A- 2 005 702**
**US-A- 3 412 056**
**US-A- 4 066 591**
**"Lehrbuch der Lacke und Beschichtungen" (H.Kittel) Band III (1976), Seite 77, 86, 348, 350 u. 351**
**Die Akte enthält technische Angaben, die nach dem Eingang der Anmeldung eingereicht wurden und die nicht in dieser Patentschrift enthalten sind.**

(73) Patentinhaber : **HOECHST SARA S.p.A.**
**I-30060 Romano d'Ezzelino, Vicenza (IT)**

(72) Erfinder : **Terziari, Giacomo**
**Via M.U. Traiano 18**
**I-20100 Mailand (IT)**

(74) Vertreter : **Mendini, Leo**
**c/o Ufficio Internazionale Brevetti Ing. C. Gregorj Via Dogana 1**
**I-20123 Milano (IT)**

EP 0 022 452 B2

**0 022 452**

**Beschreibung**

Die Herstellung von organischen Bindemitteln, insbesondere Lackbindemitteln, die Urethangruppen und verkappte Isocyanatgruppen enthalten, ist bekannt (vgl. deutsche Patentschrift Nr. 895527). Als Mittel zum Verkappen der Isocyanatgruppen sind dabei vor allem verzweigte Alkohole geeignet. Ähnliche Lackbindemittel, bei denen Isocyanatgruppen mit Hilfe von ε-Caprolactam verkappt worden sind, sind ebenfalls bekannt (vgl. deutsche Offenlegungsschrift Nr. 2047718). Die bekannten Bindemittel werden in Form von Pulverlacken eingesetzt und ergeben durch Vernetzung und Aushärtung bei erhöhter Temperatur Lackfilme.

Aus der DE-A-2 528 212 sind in Wasser lösliche oder dispergierbare Polyhydroxyverbindungen, beispielsweise Polyester, Polyäther, Polythioäther, Polyesteramide und andere bekannt, die mit Reaktionsprodukten aus Monohydroxypolyalkylenoxyden und Polyisocyanaten in Gegenwart oder in Abwesenheit von Lösungsmitteln umgesetzt werden. Als Lösungsmittel werden übliche inerte Lösungsmittel wie Aceton, Methyläthylketon oder Tetrahydrofuran eingesetzt. Die Umsetzungsprodukte werden in Substanz gewonnen oder in eine Dispersion überführt, wobei die Lösungsmittel destillativ entfernt werden. Aus der wässrigen Phase zu verarbeitende Zweikomponenten-Polyurethan-Systeme können durch Vermischen der wässrigen Dispersion der genannten Umsetzungsprodukte mit wässrigen Dispersionen von blockierten Polyisocyanaten, wie sie in der DE-A-2 456 469 beschrieben sind, hergestellt und zur Beschichtung von metallischen Oberflächen eingesetzt werden. Eine Eignung derartiger Systeme für die Herstellung von Elektroisolierungen wird aber nicht erwähnt.

Ferner ist bekannt, dass Polyurethane zur Herstellung von Lacken, insbesondere Elektroisolierlacken geeignet sind (vgl. « Ullmanns Encyklopaedie der technischen Chemie », 3. Aufl. 1960, Bd. 11, S. 356 f.). Für die Lackherstellung ist es dabei unumgänglich, dass die Reaktion der das Polyurethan bildenden Komponenten in Gegenwart eines Lösemittels stattfindet, das nachher wieder entfernt werden muss.

Als Lösemittel dienen üblicherweise Ester, Ätherester, Ketone und aromatische Kohlenwasserstoffe, d. h. Stoffe die leicht brennbar und die häufig toxisch und umweltschädlich sind.

Aufgabe der Erfindung ist nun die Schaffung eines Anstrichmittels auf Kunstharzbasis, das die Nachteile der bekannten Lackrohstoffe nicht aufweist.

Die Erfindung betrifft ein Anstrichmittel, das aus einem in Wasser löslichen oder dispergierbaren organischen Bindemittel, das ein Gemisch aus einem carboxylgruppenhaltigen Polyurethanpräpolymer mit verkappten Isocyanatgruppen und einem hydroxylgruppen- und carboxylgruppenhaltigen Polyesterharz ist und einem Lösemittelgemisch besteht und dadurch gekennzeichnet ist, dass A) das organische Bindemittel, das in dem Anstrichmittel in einer Menge von 15 bis 60 Gewichtsprozent enthalten ist, aus a) 40 bis 90 Gew.-% eines Polyurethanpräpolymers und b) 60 bis 10 Gew.-% eines Polyesterharzes besteht und B) das Lösemittelgemisch ein Gemisch aus a) Wasser, b) 10 bis 90 Gew.-% einwertigem aliphatischem Alkohol und/oder c) 10 bis 90 Gew.-% mehrwertigem aliphatischem Alkohol ist, und dass es einen pH-Wert von 6,5 bis 10,5 aufweist.

Die Erfindung betrifft ferner ein Verfahren zur Herstellung dieses Anstrichmittels, das aus einem in Wasser löslichen oder dispergierbaren organischen Bindemittel und einem Lösemittelgemisch besteht, wobei eine Lösung oder Dispersion des genannten Polyurethanpräpolymers in einem Lösemittelgemisch aus a) Wasser, b) einem einwertigen aliphatischen Alkohol und/oder c) einem mehrwertigen aliphatischen Alkohol hergestellt und auf einen pH-Wert von 6,5 bis 10,5 eingestellt wird und dann mit einer Lösung oder Dispersion des oben genannten Polyesterharzes in einem Lösemittelgemisch aus a) Wasser, b) einem einwertigen aliphatischen Alkohol und/oder c) einem mehrwertigen aliphatischen Alkohol, die zuvor auf einen pH-Wert von 6,5 bis 10,5 eingestellt worden ist, vermischt wird.

Das organische Bindemittel ist ein Kunstharzgemisch, das in Wasser löslich oder dispergierbar ist. Es setzt sich zusammen aus 40 bis 90, vorzugsweise 50 bis 80 Gewichtsprozent eines Polyurethanprepolymers, das sowohl freie Carboxylgruppen als auch verkappte (maskierte) Isocyanatgruppen aufweist, und 60 bis 10, vorzugsweise 50 bis 20 Gewichtsprozent eines Polyesterharzes, das sowohl freie Hydroxylgruppen als auch freie Carboxylgruppen aufweist. Im erfindungsgemässen Anstrichmittel liegt das organische Bindemittel in einer Menge von 15 bis 60, vorzugsweise von 20 bis 50 Gewichtsprozent vor.

Das erfindungsgemäss verwendete Polyurethanprepolymer wird hergestellt durch Umsetzung eines di- oder polyfunktionellen — Isocyanats mit einer Hydroxycarbonsäure und einer ein aktives Wasserstoffatom enthaltenden Verbindung. Die Umsetzung wird im allgemeinen bei einer Temperatur von 50 bis 200 °C, vorzugsweise von 60 bis 150 °C durchgeführt ; die Verwendung von Lösemitteln ist dabei nicht erforderlich. Es ist zweckmässig, die Umsetzung in zwei Stufen durchzuführen, wobei zunächst das Isocyanat mit der Hydroxycarbonsäure und das resultierende Reaktionsprodukt anschliessend mit der Verbindung umgesetzt wird, die ein aktives Wasserstoffatom enthält. Das Polyurethanprepolymer weist eine Säurezahl von 10 bis 200 mgKOH/g — vorzugsweise 40 bis 150 mgKOH/g — auf und einen Erweichungspunkt von 40 bis 100 °C, vorzugsweise von 60 bis 90 °C. Der Gehält an verkappten Isocyanatgruppen liegt im Bereich von 5 bis 30 Gewichtsprozent, vorzugsweise von 10 bis 20 Gewichtsprozent.

Als mehrfunktionelles Isocyanat wird üblicherweise ein Kohlenwasserstoff verwendet, der mindestens zwei Isocyanatgruppen aufweist. Bevorzugt werden aliphatische oder aromatische Di- oder Polyisocyana-

2

te. Als Beispiele sind zu nennen Toluylendiisocyanat (TDI), Xylylendiisocyanat (XDI), Bisphenylmethyl-4,4'-Diisocyanat, Triphenylmethyl-4,4',4"-Triisocyanat, Polyphenylpolymethylenisocyanat, Isophorondiisocyanat (IPDI), Hexamethylendiisocyanat (HMDI), 2,2,4-2,4,4-Trimethylendiisocyanat (TDMI), Methylcyclohexyldiisocyanat, Dicyclohexylmethyldiisocyanat, Bis-(3-methyl-4-isocyanatocyclohexyl)methan, 2,2-Bis-(4-isocyanatocyclohexyl)propan und Hexamethylendiisocyanatobiuret.

Als Hydroxycarbonsäure verwendet man einen Kohlenwasserstoff, der mindestens eine Carboxylgruppe und mindestens eine Hydroxylgruppe aufweist. Bevorzugt werden aliphatische oder aromatische Monocarbonsäuren oder Dicarbonsäuren mit 2 bis 12 Kohlenstoffatomen die 1,2 oder 3 Hydroxylgruppen enthalten. Als Beispiele sind zu nennen Glykolsäure, Salizylsäure, Weinsäure, Dimethylolpropionsäure, Apfelsäure, Rizinolsäure, p-Hydroxylbenzoesäure, Phenylglykolsäure und 4,4-Bis-(4-hydroxyphenyl)pentansäure.

Als Verbindung mit aktivem Wasserstoff werden insbesondere Phenole, Oxime und cyclische Lactame eingesetzt, z. B. Phenol, 2,4-Diisobutylphenol, Kresol, Isooctylphenol, p-tert.-Butylphenol, Phenylphenol sowie Methyläthylketonoxim, Azetonoxim, Pyruvaldehyd-1-oxim und Pyrrolidon, Piperidon, $\varepsilon$-Caprolactam.

Das Polyurethanprepolymer ist vernetzbar mit Hilfe eines Polyesterharzes, das freie Hydroxylgruppen und freie Carboxylgruppen aufweist ; die Vernetzung erfolgt durch Reaktion der Hydroxylgruppen des Polyesters mit den verkappten Isocyanatgruppen des Polyurethanprepolymers.

Das erfindungsgemäss verwendete Polyesterharz wird hergestellt durch Umsetzung eines mehrwertigen — vorzugsweise zweiwertigen, dreiwertigen oder vierwertigen — Alkohols mit einer mehrbasigen — vorzugsweise zweibasigen — Carbonsäure oder deren Anhydrid oder Ester. Die Umsetzung wird im allgemeinen bei einer Temperatur von 100 bis 250 °C, vorzugsweise von 160 bis 220 °C durchgeführt ; die Verwendung von Lösemitteln ist dabei nicht erforderlich. Das Polyesterharz weist eine Säurezahl von 20 bis 120 mg KOH/g — vorzugsweise von 40 bis 80 mgKOH/g — auf und eine Hydroxylzahl von 50 bis 500 mgKOH/g, vorzugsweise von 150 bis 350 mgKOH/g.

Als mehrwertiger Alkohol wird insbesondere eine aliphatische Verbindung mit 2 oder mehr Hydroxylgruppen verwendet, die gegebenenfalls noch weitere funktionelle Gruppen trägt, vorzugsweise eine Carboxylgruppe oder eine Isocyanatgruppe. Statt eines einzigen Alkohols kann auch ein Gemisch verschiedener Alkohole eingesetzt werden. Als Beispiele seien genannt Äthylenglykol, Propylenglykol, 1,3- und 1,4 Butandiol, Isobutandiol, Neopentylglykol, Trimethylpentandiol, Hexandiol, Glyzerin, Trimethylolpropan, Hexantriol, Trishydroxyläthylisocyanurat und Pentaerythrit, oder Derivate von Bisphenol A, wie hydriertes Bisphenol oder Isopropylidenbisphenyloxydipropanol und Isopropylidenbisphenylenoxyätanol und Polyhydroxycarbonsäuren, wie Dimethylolpropionsäure, Weinsäure, $\alpha,\beta\gamma,\delta$-Tetrahydroxyvaleriansäure, Zitronensäure.

Als mehrbasige Carbonsäure verwendet man vor allem eine aliphatische oder aromatische Dicarbonsäure ; gegebenenfalls wird auch ein Gemisch verschiedener Carbonsäuren eingesetzt. Als Beispiele sind zu erwähnen aliphatische Carbonsäuren wie Bernsteinsäure oder sein Anhydrid, Adipinsäure, Azelainsäure und Sebazinsäure, und als aromatische Carbonsäuren sind zu erwähnen : Phthalsäure oder sein Anhydrid, Isophthalsäure, Terephthalsäure oder sein Dimethylester, Tetrahydrophthalsäure oder sein Anhydrid.

Das Polyurethanprepolymer und das Polyesterharz sind nach Neutralisation mit einer Base in Wasser löslich oder dispergierbar und zwar in einem pH-Bereich von 6,5 bis 10,5, vorzugsweise von 7,0 bis 9,0. Als Base eignet sich insbesondere eine stickstoffhaltige basische Verbindung, z. B. Ammoniak sowie Amine und Aminoalkohole mit jeweils 1 bis 12, vorzugsweise 2 bis 8 Kohlenstoffatomen.

Wesentliches Merkmal der Erfindung ist die Verwendung eines Lösemittelgemisches, das zusammengesetzt ist aus a) Wasser, b) einem einwertigen aliphatischen Alkohol und/oder c) einem mehrwertigen aliphatischen Alkohol. Der Anteil des Lösemittelgemisches in dem erfindungsgemässen Anstrichmittel beträgt 40 bis 80 Gewichtsprozent. Die Menge des einwertigen aliphatischen Alkohols im Lösemittelgemisch liegt im Bereich von vorzugsweise 10 bis 90 Gewichtsprozent, während die Menge des mehrwertigen aliphatischen Alkohols vorzugsweise 10 bis 90 Gewichtsprozent beträgt (jeweils bezogen auf das Lösemittelgemisch).

Der einwertige aliphatische Alkohol ist primär, sekundär oder tertiär und weist vorzugsweise 1 bis 6 Kohlenstoffatome auf. Geeignete einwertige Alkohole sind beispielsweise Methylalkohol, Äthylalkohol, Propyl- und Isopropylalkohol, n-Butyl-, Isobutyl-, sek.-Butyl- und tert.-Butylalkohol.

Der mehrwertige aliphatische Alkohol ist vorzugsweise ein Diol oder Triol mit 2 bis 8 Kohlenstoffatomen, das unter Normalbedingungen flüssig ist. Geeignete mehrwertige Alkohole sind beispielsweise Äthylenglykol, Propylenglykol, 1,3- und 1,4-Butandiol, Isobutandiol, Diäthylenglykol, Dipropylenglykol und Glyzerin.

Das erfindungsgemässe Anstrichmittel ist lagerstabil und eignet sich zur Herstellung von Überzügen auf metallischen Oberflächen, insbesondere Elektroisolierlacken, z. B. für Kupfer-, Aluminium- oder Messingdrähte.

Die Erfindung wird durch die folgenden Beispiele erläutert. Unter Teile sind jeweils Gewichtsteile zu verstehen. Beispiele A bis D betreffen die Herstellung von Polyurethanprepolymeren, Beispiele E und F beschreiben die Herstellung von Hydroxylgruppen- und carboxylgruppenhaltigen Polyesterharzen.

## Beispiel A

In einem 1,5-l-Dreihals-Glaskolben mit Rührer, Thermometer und Rückflusskühler werden 540 Teile Isophorondiisocyanat (IPDI) und 183 Teile Weinsäure eingewogen. Der Ansatz wird auf 70 °C erwärmt. Dann werden 277 Teile ε-Caprolactam portionsweise zugegeben und die Temperatur wird stufenweise bis auf 140 °C erhöht. Man erhält ein carboxylgruppenhaltiges Polyurethanprepolymer mit verkappten Isocyanatgruppen, das 10,2 % verkappte Isocyanatgruppen, eine Säurezahl von 135 und einen Erweichungspunkt von 82 °C aufweist.

Das Reaktionsprodukt wird mit 200 Teilen Butylglykol versetzt und mit Ammoniak auf einen pH-Wert von 8 gebracht. Nach Zugabe von 400 Teilen Äthylenglykol und 400 Teilen Isobutanol wird das Gemisch durch Zusatz von Wasser auf einen Festkörpergehalt von 34 % eingestellt.

## Beispiel B

Nach dem im Beispiel A angegebenen Verfahren wird aus 589 Teilen Polymethylenpolyphenylisocyanat mit einem NCO-Anteil von 30 %, 97 Teilen Dimethylolpropionsäure und 317 Teilen ε-Caprolactam ein carboxylgruppenhaltiges Polyurethanprepolymer mit verkappten Isocyanatgruppen hergestellt. Dieses Prepolymer enthält 11,8 % verkappte Isocyanatgruppen und hat eine Säurezahl von 40 und einen Erweichungspunkt von 85 °C. Das Produkt wird mit Dimethyläthanalamin auf einen pH-Wert von 8 gebracht. Nach Zugabe von 400 Teilen Äthylenglykol und 400 Teilen Isobutanol wird das Gemisch durch Zusatz von Wasser auf einen Festkörpergehalt von 34 % eingestellt.

## Beispiel C

Aus 355 Teilen Trihydroxyäthylisocyanurat und 136 Teilen Bernsteinsäureanhydrid wird ein Kondensationsprodukt mit einer Säurezahl von 170 hergestellt. Entsprechend Beispiel A wird aus 491 Teilen dieses Kondensationsproduktes, 522 Teilen Toluylendiisocyanat und 154 Teilen ε-Caprolactam ein carboxylgruppenhaltiges Polyurethanprepolymer mit verkappten Isocyanatgruppen hergestellt. Dieses Prepolymer enthält 5,7 % verkappte Isocyanatgruppen und hat eine Säurezahl von 70 sowie einen Erweichungspunkt von 88 °C. Nach Neutralisation mit Diisopropanolamin wird das Produkt wie in Beispiel A mit Äthylenglykol, Isobutanol und Wasser verdünnt auf 34 % Festkörpergehalt eingestellt.

## Beispiel D

Nach dem im Beispiel A angegebenen Verfahren lässt man 476 Teile Toluylendiisocyanat und 138 Teile Dimethylolpropionsäure bei 70 °C reagieren. Die freien Isocyanatgruppen des Reaktionsproduktes werden mit 386 Teilen ε-Caprolactam verkappt. Das erhaltene carboxylgruppenhaltige Polyurethanprepolymer enthält 14,4 % verkappte Isocyanatgruppen und hat eine Säurezahl von 57 sowie einen Erweichungspunkt von 100 °C.

Zu dem Produkt werden 333 Teile Butylester der Glykolsäure zugefügt, und dann wird es mit Methylisopropanolamin auf einen pH-Wert von 8 gebracht. Danach wird das Produkt analog dem Beispiel A mit Propylenglykol, Isobutanol und Wasser verdünnt und auf 34 % Festkörpergehalt eingestellt.

## Beispiel E

In einem 2-l-Dreihals-Glaskolben mit Rührer, Thermometer und Kühler werden 111 Teile Dimethylolpropionsäure, 525 Teile Trimethylolpropan und 487 Teile Adipinsäure eingewogen. Der Ansatz wird vorsichtig auf 200 °C erwärmt und so lange auf dieser Temperatur gehalten, bis das Produkt eine Säurezahl von 55 und eine Hydroxylzahl von 180 aufweist.

Dem erhaltenen gesättigten Polyesterharz werden 200 Teile Glykolsäure-n-butylester, Dimethyläthanolamin (bis zum pH-Wert 8), 300 Teile Äthylenglykol und 300 Teile Isobutanol zugesetzt. Der Festkörpergehalt wird dann mit Wasser auf 34 % eingestellt.

## Beispiel F

In einem 2-l-Kolben werden 120 Teile Dimethylolpropionsäure, 690 Teile Trihydroxyäthylisocyanurat und 373 Teile Adipinsäure eingewogen. Der Ansatz wird bei 180 °C bis auf eine Säurezahl von 55 verestert. Man erhält ein carboxylgruppenhaltiges Polyesterharz mit einer Hydroxylzahl von 340.

Dem erhaltenen Produkt werden 200 Teile Glykolsäure-n-butylester, Methylisopropanolamin (bis zum pH-Wert von 8), eine Mischung 1 : 1 Isobutanol/Wasser bis auf 34 % Festkörpergehalt zugesetzt.

## Beispiel 1 bis 8

a) Die nach den Beispielen A bis D erhaltenen Polyurethanprepolymeren werden mit den nach den Beispielen E und F erhaltenen Polyesterharzen in den in Tabelle 1 genannten Verhältnissen gemischt.

4

Tabelle 1

| Beispiel | 1 | 2 | 3 | 4 | 5 | 6 | 7 | 8 |
|---|---|---|---|---|---|---|---|---|
| A | 69,6 | 54,8 | | | | | | |
| B | | | 66,4 | 51,1 | | | | |
| C | | | | | 80,4 | 68,4 | | |
| D | | | | | | | 60,7 | 48,2 |
| E | 30,4 | | 33,6 | | 19,6 | | 39,3 | |
| F | | 45,2 | | 48,9 | | 31,6 | | 51,8 |
| Summe | 100 | 100 | 100 | 100 | 100 | 100 | 100 | 100 |

b) Die nach a erhaltenen Anstrichmittel werden unter folgenden Bedingungen auf Kupferdraht in einem von der Firma MAG, Graz, hergestellten waagrechten Ofen aufgetragen.

| | | | |
|---|---|---|---|
| Durchzüge | Filzen | Ofenlänge | 3,80 m |
| Leiterdurchmesser | 0,15 mm | Ofentemperatur 1. Zone : | 420 °C |
| Abzugsgeschwindigkeit | 74-84 m/min | 2. Zone : | 480 °C |

Nach dem Auftragen werden an dem erhaltenen Lack die in Tabelle 2 aufgeführten Eigenschaften festgestellt.

Tabelle 2

| Beispiel | 1 | 2 | 3 | 4 | 5 | 6 | 7 | 8 |
|---|---|---|---|---|---|---|---|---|
| Aussehen (Filmoberfläche) | glatt | glatt | glatt | glatt | glatt | glatt | glatt | glatt |
| Durchmesserzunahme (µ) | 16 | 17 | 17 | 17 | 20 | 18 | 20 | 20 |
| Schabefestigkeit u. Vordehnung (Wickellocke 1 Ø nach Vordehnung) | 22 | 22 | 23 | 24 | 22 | 20 | 21 | 22 |
| Wärmeschock (°C) | 160 | 160 | 160 | 160 | 160 | 160 | 160 | 160 |
| Erweichungstemperatur (°C) | 200 | 205 | 195 | 200 | 215 | 225 | 210 | 220 |
| Lötbarkeit bei 370°C (sek.) | 2 | 2 | 3,5 | 3 | 2 | 2 | 2 | 2 |
| Durchschlagspannung (V) | 3000 | 3100 | 4000 | 4000 | 4100 | 3800 | 3700 | 3600 |
| Steilanstieg der tg-δ-Kurve | 130 | 130 | 125 | .135 | 135 | 145 | 120 | 125 |

**Patentansprüche**

1. Anstrichmittel, bestehend aus einem in Wasser löslichen oder dispergierbaren organischen Bindemittel, das ein Gemisch aus einem carboxylgruppenhaltigen Polyurethanpräpolymer mit verkappten Isocyanatgruppen und einem hydroxylgruppen- und carboxylgruppenhaltigen Polyesterharz ist, und einem Lösemittelgemisch, dadurch gekennzeichnet, dass A) das organische Bindemittel, das in dem Anstrichmittel in einer Menge von 15 bis 60 gew.-% enthalten ist, aus a) 40 bis 90 Gew.-% eines Polyurethanpräpolymers und b) 60 bis 10 Gew.-% eines Polyesterharzes besteht, und B) das Lösemittelgemisch ein Gemisch aus a) Wasser, b) 10 bis 90 Gew.-% einwertigem aliphatischem Alkohol und/oder c) 10 bis 90 Gew.-% mehrwertigem aliphatischem Alkohol ist, und dass es einen pH-Wert von 6,5 bis 10,5 aufweist.

2. Anstrichmittel nach dem Anspruch 1, dadurch gekennzeichnet, dass der einwertige aliphatische Alkohol ein Alkanol mit 1 bis 6 Kohlenstoffatomen ist.

3. Anstrichmittel nach dem Anspruch 1, dadurch gekennzeichnet, dass der mehrwertige aliphatische Alkohol ein Diol mit 2 bis 8 Kohlenstoffatomen ist.

4. Verfahren zur Herstellung eines Anstrichmittels gemäss den Ansprüchen 1 bis 3, dadurch gekennzeichnet, dass eine Lösung oder Dispersion eines Polyurethanpräpolymers in einem Lösemittelgemisch aus a) Wasser, b) einem einwertigen aliphatischen Alkohol und/oder c) einem mehrwertigen aliphatischen Alkohol auf einen pH-Wert von 6,5 bis 10,5 eingestellt wird und dann mit einer Lösung oder Dispersion eines Polyesterharzes in einem Lösemittelgemisch aus a) Wasser, b) einem einwertigen aliphatischen Alkohol und/oder c) einem mehrwertigen aliphatischen Alkohol, die einen pH-Wert von 6,5 bis 10,5 aufweist, vermischt wird.

5. Verwendung eines Anstrichmittels gemäss Anspruch 1 zum Herstellen von Überzügen auf metallischen Oberflächen.

**Claims**

1. A coating composition consisting of a water soluble or dispersable organic binding agent, which agent is a mixture of a polyurethane prepolymer containing carboxyl groups with blocked isocyanate groups and a polyester resin containing hydroxyl groups and carboxyl groups, and of a solvent mixture characterized in that A) the organic binding agent which is contained in the coating composition in an amount of from 15 to 60 wt.-% is a mixture of : (a) 40 to 90 wt.-% polyurethane prepolymer and (b) 60 to 10 wt.-% of a polyester resin, B) the solvent mixture is a mixture of : (a) water, (b) 10 to 90 wt.-% monovalent aliphatic alcohol, and/or (c) 10 to 90 wt.-% polyvalent aliphatic alcohol, and having a pH value of from 6.5 to 10.5.

2. A coating composition according to claim 1, characterized in that the monovalent aliphatic alcohol is an alkanol having 1 to 6 carbon atoms.

3. A coating composition according to claim 1, characterized in that the polyvalent aliphatic alcohol is a diol having 2 to 8 carbon atoms.

4. A process for making a coating composition according to claims 1 to 3, characterized in that a solution or a dispersion of a polyurethane prepolymer in a solvent mixture of : (a) water, (b) a monovalent aliphatic alcohol, and/or (c) a polyvalent aliphatic alcohol, the pH value of which is adjusted to from 6.5 to 10.5, is then admixed with a solution or dispersion of a polyester resin in a solvent mixture of (a) water, (b) monovalent aliphatic alcohol, and/or (c) a polyvalent aliphatic alcohol, having a pH value of from 6.5 to 10.5.

5. Use of a coating composition according to claim 1 for making coatings on metal surfaces.

**Revendications**

1. Produit de vernissage constitué d'un liant organique soluble ou se dispersant à l'eau, qui est un mélange de prépolymère polyuréthannique carboxilé avec des groupes isocyanates bloqués et d'une résine polyester avec des groupes oxhydriliques et carboxyliques, et d'un mélange de solvants, caractérisé : A) en ce que le liant organique contenu dans le produit de vernissage en raison d'un poids compris entre 15 et 60 % en poids est constitué : a) 40 à 90 % en poids d'un pré-polymère polyuréthannique et b) de 60 à 10 % en poids d'une résine polyester et B) le mélange de solvants est constitué de : a) eau, b) 10 à 90 % en poids d'un alcool monovalent aliphatique et/ou c) 10 à 90 % en poids d'un alcool polyvalent aliphatique, le pH ayant une valeur de 6,5 à 10,5.

2. Produit de vernissage selon la revendication 1, caractérisé en ce que l'alcool monovalent aliphatique est un alcanol contenant de 1 à 6 atomes de carbone.

3. Produit de vernissage selon la revendication 1, caractérisé en ce que l'alcool polyvalent aliphatique est un diol contenant de 2 à 8 atomes de carbone.

4. Procédé pour la préparation d'un produit de vernissage selon les revendications de 1 à 3, caractérisé en ce qu'une solution ou une dispersion d'un prépolymère polyuréthannique dans un mélange constitué de : a) eau, b) un alcool monovalent aliphatique et/ou c) un alcool polyvalent aliphatique dont le pH est réglé à une valeur de 6,5 à 10,5 est ensuite mêlée avec une solution ou une dispersion d'une résine polyester dans un mélange de solvant constitué de : a) eau, b) un alcool monovalent aliphatique et/ou c) un alcool polyvalent aliphatique ayant une valeur pH de 6,5 à 10,5.

5. Emploi d'un produit de vernissage selon la revendication 1 pour la fabrication de revêtements de surfaces métalliques.